(19) **Europäisches Patentamt**

**European Patent Office**

**Office européen des brevets**

(11) Veröffentlichungsnummer: **0 430 021 A2**

(12) # EUROPÄISCHE PATENTANMELDUNG

(21) Anmeldenummer: **90122127.5**

(22) Anmeldetag: **20.11.90**

(51) Int. Cl.⁵: **G01N 1/10**

(30) Priorität: **01.12.89 DE 3939799**

(43) Veröffentlichungstag der Anmeldung:
**05.06.91 Patentblatt 91/23**

(84) Benannte Vertragsstaaten:
**DE FR GB IT Patentblatt**

(71) Anmelder: **BASF Aktiengesellschaft**
**Carl-Bosch-Strasse 38**
**W-6700 Ludwigshafen(DE)**

(72) Erfinder: **Rohns, Manfred**
**Bruesseler Ring 4**
**W-6700 Ludwigshafen(DE)**

(54) **Vorrichtung zur Probennahme von auskristallisierenden Flüssigkeiten.**

(57) Zur Probe aus einem Behälter zu entnehmende Flüssigkeiten, die leicht zum Auskristallisieren neigen, werden in einem mit dem Behälter in Verbindung stehenden Kreislauf sowohl in Bewegeung als auch auf der Arbeitstemperatur gehalten. Die eigentliche Entnahme erfolgt im Nebenstrom. Die Entnahmevorrichtung hierfür besteht aus einem Dreiwegeventil (8) mit einem Probenauslauf (11), das über eine Entnahmerohrleitung (5) mit einer Pumpe (7) und eine Rückführrohrleitung (9) mit dem Behälter (2) in Verbindung steht.

# VORRICHTUNG ZUR PROBENNAHME VON AUSKRISTALLISIERENDEN FLÜSSIGKEITEN

Die Erfindung betrifft eine Vorrichtung zur Probennahme von auskristallisierenden Flüssigkeiten aus Behältern.

Die bisher im Fachhandel zur Verfügung stehenden Vorrichtung für Probennahmen zur Prüfung der Zusammensetzung von flüssigen Produkten sind nur für nicht auskristallisierende Flüssigkeiten geeignet. Meist sind dies speziell konstruierte Ventile, die bei auskristallisierenden Flüssigkeiten, gewöhnlich bei deren Abkühlen unter die Arbeitstemperatur, zum Verstopfen neigen.

Dementsprechend liegt der vorliegenden Erfindung die Aufgabe zugrunde, eine vorrichtung zur Probennahme von Flüssigkeiten aus Behältern zu entwickeln, die auch bei leicht zum Auskristallisieren neigenden Flüssigkeiten einsetzbar ist.

Die die Aufgabe lösende Vorrichtung ist gekennzeichnet durch eine an den Behältern anschließbare Entnahmerohrleitung und eine ebenso anschließbare Rückführrohrleitung, ein an die beiden Rohrleitungen angeschlossenes Dreiwegeventil sowie durch eine in die Entnahmerohrleitung eingefügte Pumpe.

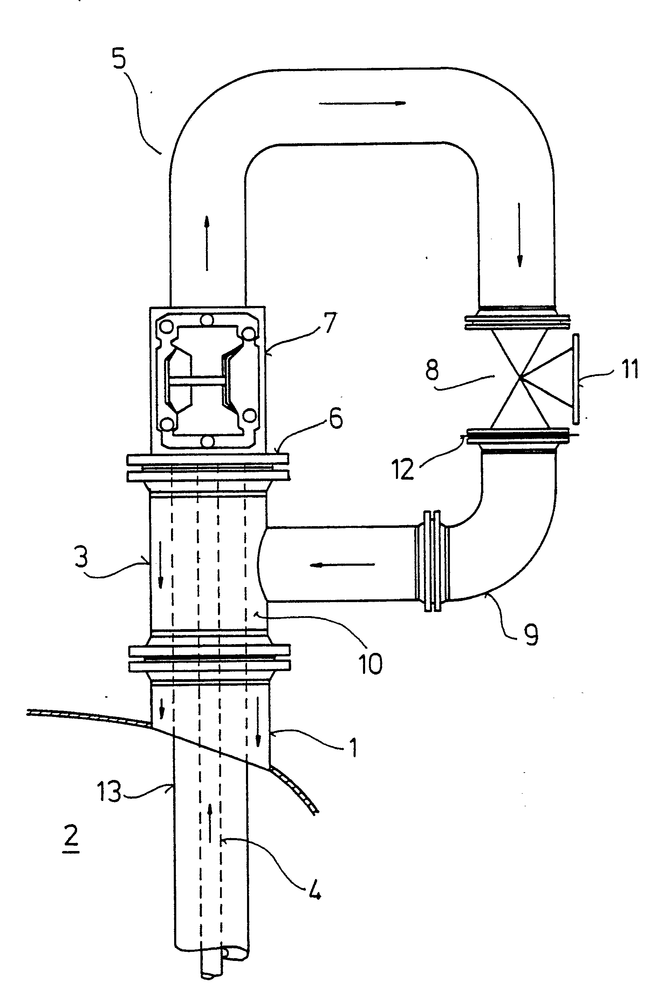

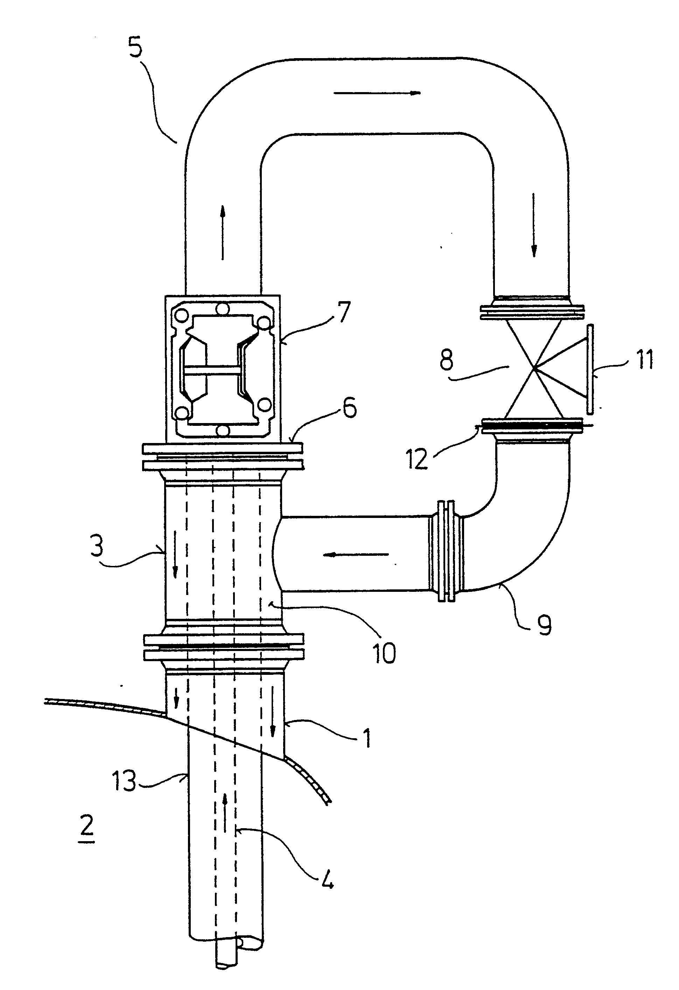

Die erfindungsgemäße Vorrichtung ist anhand eines in der Zeichnung schematisch dargestellten Ausführungsbeispiels im einzelnen nachfolgend beschrieben.

Auf den Anschlußstutzen 1 eines Behälters 2, in dem sich die zu entnehmende Flüssigkeit befindet, ist ein T-Rohrstück 3 montiert, durch das der behälterseitige Abschnitt 4 einer Entnahmerohrleitung 5 in das Behälterinnere ragt. Dieser Abschnitt, der eine Abschlußplatte 6 am T-Rohrstück 3 durchdringt, ist an eine Pumpe 7, wegen des möglichen Trockenlaufs vorzugsweise eine Einfach- oder Doppelmembranpumpe, angeschlossen. Es ist zweckmäßig, für eine solche Pumpe einen mechanischen bzw. elektromechanischen Antrieb vorzusehen.

Ausgangsseitig ist die Pumpe über die Entnahmerohrleitung 5 mit einem Dreiwegeventil 8 verbunden, an dessen Ausgang eine Rückführrohrleitung 9 angeschlossen ist. Diese Leitung mündet am T-Rohrstück 3 in den Ringraum 10 zwischen dem Rohrabschnitt 4 und der Rohrstückinnenwand, so daß die dadurch im Kreislauf führbare Probenflüssigkeit in den Behälter zurückfließen kann. Am Probenauslauf 11 des Ventils 8 kann die zu prüfende Flüssigkeit entnommen werden, wobei der dafür notwendige Staudruck im Ventil durch eine in die Rückführrohrleitung 9 eingefügte Lochscheibe 12 erzeugt wird. Zur Verhinderung des Verstopfens des Auslaufs 11 ist es vorteilhaft, für das Dreiwegeventil 8 ein Nadelventil oder eine ähnliche Ventilkonstruktion einzusetzen.

Es hat sich als zweckmäßig erwiesen, den in das Behälterinnere ragenden Rohrabschnitt 4 von einem Schutzrohr 13 zu umgehen, um bei stark bewegten Flüssigkeiten im Behälter, z.B. durch Rührwerke, eine ausreichende Stabilität der Anordnung zugewährleisten.

Durch die Vorrichtung nach der Erfindung ist in vorteilhafter Weise erreicht, daß die zur Probe zu entnehmende Flüssigkeit in einem Kreislauf sowohl in Bewegung als auch auf Arbeitstemperatur gehalten und dadurch ein Auskristallisieren verhindert wird.

## Ansprüche

1. Vorrichtung zur Probennahme von leicht auskristallisierenden Flüssigkeiten aus Behältern, gekennzeichnet durch eine an den Behälter (2) anschließbare Entnahmerohrleitung (5) und eine ebenso anschließbare Rückführrohrleitung (9), ein an die beiden Rohrleitungen angeschlossenes Dreiwegeventil (8) sowie durch eine in die Entnahmerohrleitung eingefügte Pumpe (7).

2. Vorrichtung nach Anspruch 1, dadurch gekennzeichnet, daß der Behälter (2) einen Anschlußstutzen (1) aufweist, durch den die Entnahmerohrleitung (5) in den Behälterinnenraum geführt ist und an dem in konzentrischer Anordnung mit dieser die Rückführrohrleitung (9) angeschlossen ist.

3. Vorrichtung nach Anspruch 1 und 2, dadurch gekennzeichnet, daß als Pumpe (7) eine Membranpumpe eingesetzt wird.